# EUROPÄISCHE PATENTSCHRIFT

(11) **EP 1 175 543 B1**
(45) Veröffentlichungstag und Bekanntmachung des Hinweises auf die Patenterteilung: **10.08.2005**
(21) Anmeldenummer: 01915228.9
(22) Anmeldetag: 12.02.2001
(51) Int. Cl.: E06B 3/54

(54) **VERBINDUNGSBRÜCKE ZUR VERBINDUNG VON GLASWANDSEGMENTEN, DIE MIT SOLARPANEELEN AUSGESTATTET SIND**
CONNECTING BRIDGES FOR CONNECTING GLASS WALL SEGMENTS EQUIPPED WITH SOLAR PANELS
PONT DE LIAISON POUR ASSEMBLER DES SEGMENTS DE PAROI DE VERRE EQUIPES DE PANNEAUX SOLAIRES

(30) Priorität: 25.02.2000 DE 10008868
(43) Veröffentlichungstag der Anmeldung: 30.01.2002
(73) Patentinhaber: DORMA GmbH + Co. KG, 58256 Ennepetal (DE)
(72) Erfinder: ELMER, Hubert, A-6065 Thaur (AT); GINZEL, Lothar, 58239 Schwerte (DE); LEITGEB, Peter, A-6165 Telfes (AT); MÜLLER, Elmar, A-6165 Telfes (AT)
(86) Internationale Anmeldenummer: PCT/EP2001/001526
(87) Internationale Veröffentlichungsnummer: WO 2001/063082

(56) Entgegenhaltungen:
- EP-A- 0 784 129
- WO-A-99/63193
- DE-A- 10 000 417
- DE-U- 29 906 076
- FR-A- 2 738 271

## Beschreibung

Die Erfindung betrifft eine mittels eines zentralen Stützlagers an einer Wand, einer Unterkonstruktion oder dergleichen angeschlossene Verbindungsbrücke zur Verbindung mit einem oder mehreren Glaswandsegmenten oder Plattensegmenten, die mit einem Solarpaneel ausgestattet sind bzw. bei denen die einzelnen Solarzellen integriert sind, mit wenigstens einem radial vom Stützlager verlaufenden Tragarm, an dessen dem Stützlager abgewandten freien Ende ein Anschlussgelenk für den Anschluss eines das Glaswandsegment oder Plattensegment einspannenden Klemmbeschlages angeordnet ist, und die Verbindungsbrücke eine zentrale Durchführung der Anschlusskabel der Solarpaneel aufweist.

Bei einer gattungsgemäßen Vorrichtung nach der EP 0 784 129 A1 ist eine vierarmige Verbindungsbrücke über ein zentrales Stützlager starr an eine Unterkonstruktion angeschlossen, während die freien Enden der Tragarme über ein verstarrbares Anschlussgelenk an den eine Glasscheibe einspannenden Klemmbeschlägen derart angeschlossen sind, dass die gelenkige Abstützung unmittelbar an einer konkaven Lagerfläche des gebäudeinnenseitigen Klemmelementes des Klemmbeschlages erfolgt. Dies bedingt nicht nur eine aufwendige Ausbildung aller Klemmbeschläge, insbesondere werden in das System eingeleitete Spannungen unmittelbar auf das gebäudeinnenseitige Klemmelement des Klemmbeschlages übertragen, was zu einer Zerstörung von Solarzellen führen würde.

Aufgabe der Erfindung ist es, die erforderliche Anpassbarkeit und Montagefreundlichkeit der Verbindungsbrücke an Bautoleranzen der Unterkonstruktion oder dergleichen zu optimieren, das heißt insbesondere die zentrale Abstützung des Stützlagers der Verbindungsbrücke an einer Unterkonstruktion oder dergleichen zu verbessern, wobei auf eine aufwendige raumgelenkige Abstützung der einzelnen Tragarme der Verbindungsbrücke an den einzelnen Klemmbeschlägen verzichtet werden soll.

Weiterhin wird eine einfache konstruktive Ausgestaltung der gesamten Verbindungsbrücke, insbesondere der Tragarme und der an die freien Enden der Tragarme anschließenden Gelenke angestrebt, wobei auch eine Möglichkeit der Führung der Anschlusskabel der Solarpaneele gegeben sein muss.

Die Erfindung löst die gestellte Aufgabe mit der Lehre nach Anspruch 1, der zufolge das zentrale Stützlager ein Raumgelenklager ist und das Anschlussgelenk als Bolzengelenk ausgebildet und zwischen dem Tragarm und dem Klemmbeschlag angeordnet ist. Gleichzeitig ist das Stützlager so ausgebildet, dass es eine Durchführung eines Anschlusskabels ermöglicht, wobei das Stützlager darüber hinaus eine Kabelaufnahme beinhalten kann.

Nach der erfindungsgemäßen Lösung ist nur eine einzige raumgelenkige Abstützung im zentralen Stützlager vorgesehen, die eine Anpassung des zentralen Stützlagers und damit der Verbindungsbrücke an die Unterkonstruktion oder dergleichen ermöglicht, während über einfache Bolzengelenke zwischen den freien Enden der Tragarme und der Klemmbeschläge eine Anpassung der Klemmbeschläge an die anzuschließenden Glaswandsegmente oder Plattensegmente mit den Solarpaneelen ermöglicht. Dabei finden bevorzugt - wie noch zu erläutern sein wird - Klemmbeschläge Verwendung, die in sich begrenzt verformbar, das heißt in sich begrenzt raumgelenkig ausgebildet sind.

Zur Weiterleitung der Anschlusskabel, die von den einzelnen Solarpaneelen abgehen, wird im Anschluss an das zentrale Stützlager eine Vorrichtung z.B. in Form eines Rohres vorgeschlagen, in welche die Anschlusskabel eintauchen und weiter durch eine zentrale Bohrung eines Befestigungsgliedes zu einer Unterkonstruktion und damit verdeckt zu einem Wechselrichter geführt werden. Die so verlegten Kabel sind vandalismussicher und stören auch nicht den Blick eines Betrachters auf die gesamte Konstruktion der Glaswandsegmente mit ihren Solarpaneelen.

Weitere Merkmale der Erfindung sind durch die Unteransprüche gekennzeichnet.

Verbindungsbrücken für den vorgenannten Zweck werden im Regelfall aus Edelstahl oder Guss gefertigt. Mit Bezug auf die konstruktive Gestaltung der Tragarme der Verbindungsbrücke wird vorgeschlagen, diese vollwandig oder hohl und im Querschnitt kreisförmig oder oval auszubilden, wobei sie von dem zentralen Stützlager ausgehend gegen das Glaswandsegment oder Plattensegment verlaufend konvex gekrümmt sein können. Aus Fertigungsgründen hat es sich als zweckmäßig erwiesen, dass der Tragarm der Verbindungsbrücke in einer radialen Bohrung des zentralen Stützlagers verlötet ist oder einstückig als Gussteil hergestellt wird und an seinem freien Ende eine Anschlusslasche des Anschlussgelenkes aufweist, an die eine Anschlussgabel eines Klemmbeschlages anschließt, wobei die Anschlusslasche und die Anschlussgabel das Anschlussgelenk bilden. Das Anschlussgelenk ist nicht verstarrbar, es dient zur spannungsfreien Montage und wirkt nur kraftübertragend.

In konstruktiver Ausgestaltung der technischen Lehre nach Anspruch 1 wird mit der Erfindung ferner vorgeschlagen, dass das durch das zentrale Stützlager gebildete Raumgelenklager aus einem topfartigen Grundkörper besteht, dessen gegen die Unterkonstruktion oder dergleichen gerichteter Topfboden eine Durchtrittsöffnung für eine die Durchtrittsöffnung mit Spiel durchfassenden Befestigungsschraube aufweist, wobei an der der Unterkonstruktion oder dergleichen zugewandten Fläche des Topfbodens eine konkav gemuldete Lagerfläche für die Aufnahme einer eine konkave Komplementärfläche aufweisenden Linse angeordnet ist, dass ferner an der dem Glassegment oder Plattensegment zugewandten Fläche des Topfbodens eine plane Lagerfläche für die Abstützung einer eine plane Lagerfläche aufweisenden plankonvexen Linse angeordnet ist, an deren konkaven Fläche eine plankonvexe Linse mit ihrer konvexen Fläche anliegt und dass das Raumgelenk mittels einer mit der Befestigungsschraube verschraubbaren Kontermutter justierbar ist, und gleichzeitig alle vorerwähnten auf einer Achse liegenden Bauteile eine zentrale Bohrung aufweisen, durch die die Anschlusskabel sicher geführt werden können, wobei gleichzeitig die Beweglichkeit und Justierbarkeit des Raumgelenklagers erhalten bleibt.

Bei einer derartigen Ausbildung des Raumgelenkes im zentralen Bereich der Verbindungsbrücke kann die Befestigungsschraube problemlos mit der Unterkonstruktion verbunden werden, wobei sie einen gewissen Winkel zu der durch die Erstreckung der Arme gegebenen Ebene einschließen kann. Dabei verschieben sich die vorerwähnten Linsen zueinander bzw. gegenüber den entsprechenden Anlageflächen des topfartigen Grundkörpers. Nach dem Anschluss der Befestigungsschraube an der Unterkonstruktion kann die Kontermutter angezogen und somit das Raumgelenk verstarrt werden.

Die dem Glassegment oder Plattensegment zugewandte offene Seite des topfartigen Grundkörpers nimmt das Rohr zur Sammlung der Anschlusskabel auf. Das Rohr kann angeformt sein, oder mittels eines Gewindes aufgeschraubt werden. Zur besseren Einführung der Anschlusskabel kann das Rohr eine Innenfase bzw. ein trichterförmiges offenes Ende ausweisen.

Bei einem möglichen Anschluss der Verbindungsbrücke an einer Wand kann die dem Stützlager raumgelenkig gelagerte Befestigungsschraube mittels einer Querbohrungen aufweisenden Befestigungshülse mit der Wand verbunden werden, wobei die Befestigungshülse der Wand anliegende Stützplatten aufweist, die eine flächige Auflage der Befestigungshülse an der Ebene der Wand gewährleisten.

Die Anschlussgelenke an den Enden der Tragarme sind so ausgebildet, dass die vorhandenen Anschlusslaschen an den Tragarmen sich in axialer Richtung der Tragarme erstrecken. Hierdurch wird eine unter 45° mögliche Krafteinleitung aus dem flächigen Bauteil des Glaswandsegmentes mit den Solarpaneelen über die Tragarme in das zentrale Stützlager der Verbindungsbrücke möglich.

Die Verbindung der Anschlusslaschen und Anschlussgabeln der Klemmbeschläge in Form eines Anschlussgelenkes ist nur kraftschlüssig, das heißt das Anschlussgelenk wird nicht verstarrt. Die Verbindung zwischen Anschlusslasche und Anschlussgabel kann durch einen Bolzen, Niet, Schraube usw. realisiert werden.

Wie vorerwähnt finden bei der Erfindung bevorzugt Klemmbeschläge Verwendung, deren innerer Aufbau so ausgebildet ist, dass zwischen den die Glasscheibe oder dergleichen einspannenden Klemmelementen des Klemmbeschlages und dem Anschlusspunkt an eine Halterung, beispielsweise auch an das Anschlussgelenk einer Verbindungsbrücke eine begrenzte Beweglichkeit gegeben ist, um unmittelbar in die Glasscheibe (Solarpaneel) eingeleitete Spannungen bereits im Bereich des Klemmbeschlages aufnehmen und eliminieren zu können.

In Ausgestaltung der Erfindung kennzeichnet sich der Klemmbeschlag somit dadurch aus, dass er ein innnenseitiges Klemmelement und ein außenseitiges Klemmelement aufweist, wobei das innenseitige Klemmelement an seiner dem Glaswandsegment abgewandten Mantelfläche eine durch ein dauerelastisches Federglied gebildete kegelige oder ballige Fläche (Mantelfläche) aufweist, gegen die eine Komplementärfläche eines Innenmantels einer Überwurtglocke mit einstellbarer Vorspannung anstellbar ist, wobei die Überwurfglocke an ihrer der Unterkonstruktion zugewandten Seite einen mit einem Gewinde versehenen, von einer Überwurfmutter überfassten zylindrischen Fortsatz aufweist und zwischen der Überwurfglocke und der Überwurfmutter ein mit radialem Spiel geführter Flansch einer Anschlussgabel des Bolzengelenkes (Anschlussgelenk) einspannbar ist. Der so ausgebildete Klemmbeschlag lässt neben der vorbeschriebenen durch das dauerelastische Federglied gegebenen Ausgleichsmöglichkeit einen zusätzlichen Ausgleich des Klemmbeschlages gegenüber dem Anschlussgelenk dadurch zu, dass der Flansch der Anschlussgabel mit radialem Spiel im Klemmbeschlag geführt ist. Dieses Merkmal gewährleistet zusätzlich beispielsweise eine Anpassung an baulich bedingte Toleranzen der Bohrlöcher in den einzelnen Glaswandsegmenten.

In weiterer Ausgestaltung der Erfindung kann ein Klemmbeschlag der grundsätzlich gleichen Bauart zwischen der Überwurfglocke und der Überwurfmutter ein teilweise Bestandteil der Anschlussgabel bildendes Raumgelenk aufweisen, das beispielsweise durch einen linsenförmigen Fortsatz der Anschlussgabel und eine entsprechende, zwischen Überwurfglocke und Überwurfmutter gelagerte zweite Linse gebildet wird. Auch mittels dieses zusätzlichen Raumgelenkes ist eine gute Anpassung des Klemmbeschlages an Bohrlochtoleranzen eines Glaswandsegmentes möglich, wodurch deutlich wird, dass bei der Montage der Glaswandsegmente mit Solarpaneelen keinerlei Spannungen in den Solarzellen und auch damit in den Glaswandsegmenten entstehen.

Die konstruktive Ausgestaltung der erfindungsgemäßen Verbindungsbrücke ist nicht auf die Verwendung der aus dem Stand der Technik bekannten vier Tragarme beschränkt; sie kann drei, zwei oder nur einen jeweils radial zum Stützlager verlaufenden Tragarm aufweisen. Zur Weiterführung der Anschlusskabel der Solarzellen befindet sich an dem Stützlager jeweils eine Vorrichtung, die eine saubere, vandalismussichere und montagefreundliche Verlegung dieser Anschlusskabel sicherstellt.

Die Erfindung wird nachfolgend anhand von verschiedenartigen Ausführungsbeispielen einer Verbindungsbrücke, zwei Ausführungsbeispiele eines Klemmbeschlages und einem Ausführungsbeispiel eines Stützlagers näher beschrieben.

Es zeigen:
- Figur 1:: Eine vierarmige Verbindungsbrücke in der Vorderansicht.
- Figur 2:: Die Verbindungsbrücke nach Figur 1 in der Draufsicht.
- Figur 3:: Die Verbindungsbrücke nach den Figuren 1 und 2 als perspektivische Explosionszeichnung.
- Figur 4:: Die Draufsicht auf eine dreiarmige Verbindungsbrücke.

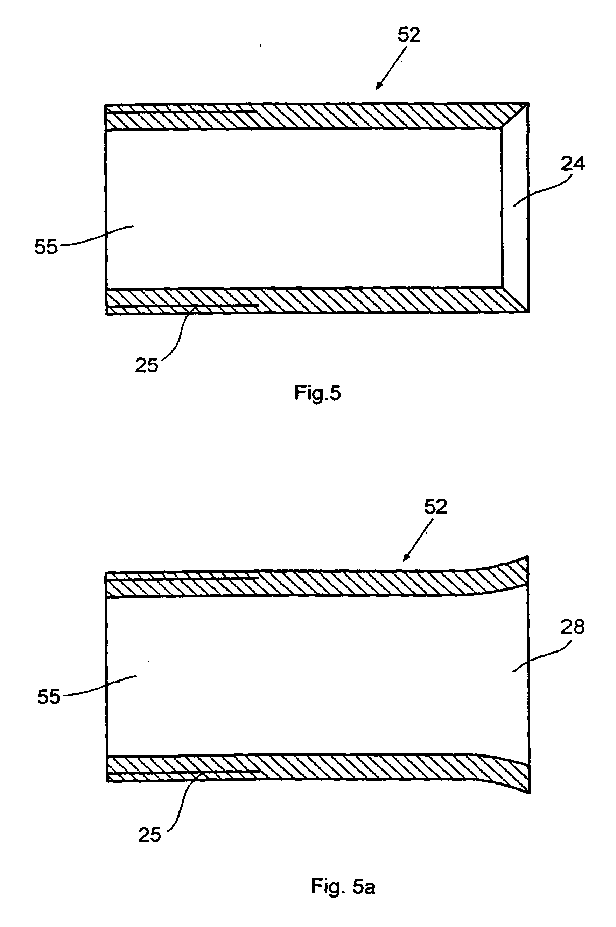

- Figur 5:: Eine Kabelaufnahme im Schnitt.
- Figur 5a:: Eine Kabelaufnahme im Schnitt mit einem trichterförmigen Endbereich.
- Figur 6:: Eine zweiarmige Verbindungsbrücke in der Vorderansicht.
- Figur 7:: Eine zweiarmige Verbindungsbrücke in der Draufsicht.
- Figur 8:: Die Verbindungsbrücke nach den Figuren 6 und 7 als perspektivische Explosionszeichnung.
- Figur 9:: Eine zweiarmige Verbindungsbrücke mit Wandanschluss in der Vorderansicht.
- Figur 10:: Eine zweiarmige Verbindungsbrücke mit Wandanschluss in der Draufsicht.
- Figur 11:: Die Verbindungsbrücke nach den Figuren 9 und 10 als perspektivische Explosionszeichnung.
- Figur 12:: Eine einarmige Verbindungsbrücke in der Vorderansicht.
- Figur 13:: Eine einarmige Verbindungsbrücke in der Draufsicht.
- Figur 14:: Die Verbindungsbrücke nach den Figuren 12 und 13 als perspektivische Explosionszeichnung.
- Figur 15:: Ein erstes Ausführungsbeispiel eines Klemmbeschlages in der Vorderansicht.
- Figur 16:: Einen Klemmbeschlag nach Figur 15 in einer Schnittdarstellung A-A.
- Figur 17:: Ein zweites Ausführungsbeispiel eines Klemmbeschlages in der Vorderansicht.
- Figur 18:: Einen Klemmbeschlag nach Figur 17 in einer Schnittdarstellung A-A.
- Figur 19:: Einen Klemmbeschlag nach Figur 17 in einer Schnittdarstellung A-A, jedoch in Darstellung der Verstellmöglichkeiten:
- Figur 20:: Einen Vertikalschnitt durch ein zentrales Stützlager mit angeschlossenem Klemmbeschlag einer zweiarmigen Verbindungsbrücke.
- Figur 21:: Einen Vertikalschnitt durch ein zentrales Stützlager mit angeschlossenem Klemmbeschlag einer zweiarmigen Verbindungsbrücke, jedoch mit verstelltem Befestigungsglied und Glaswandsegment und Kabelführung.
- Figur 22:: Ein weiteres Ausführungsbeispiel einer Verbindungsbrücke nach Figur 1 im montierten Zustand an vier Glaswandsegmenten, mit einer modifizierten Kabelaufnahme in perspektivischer Darstellung.
- Figur 23:: Eine Verbindungsbrücke nach Figur 22 in der Seitenansicht mit geschnittenem Mittelteil (Befestigungsglied, zentrales Stützlager).
- Figur 24:: Eine perspektivische Explosionszeichnung nach Figur 22.

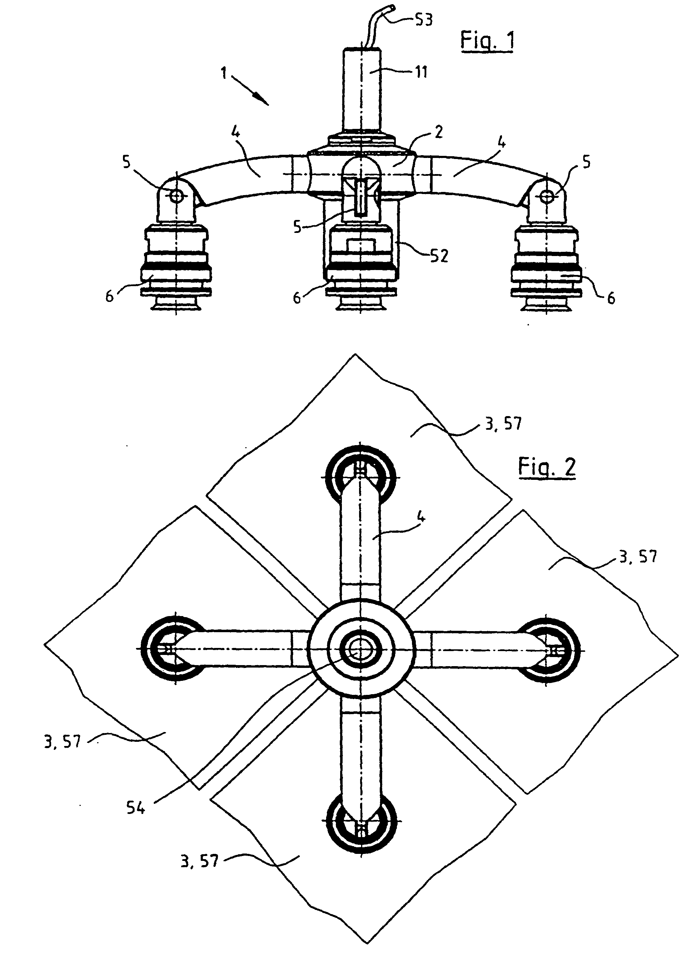

Eine allgemein mit 1 bezeichnete Verbindungsbrücke besitzt ein als Raumgelenklager ausgebildetes zentrales Stützlager 2 an das nach den Figuren 1 bis 3 vier Tragarme 4 angeschlossen sind. Die Tragarme 4 werden dabei mit ihren zylindrischen Enden in radiale Bohrungen 44 eines topfartigen Grundkörpers 8 eingesetzt und verlötet oder verschweißt; es ist auch möglich die Verbindungsbrücke 1 bestehend aus Grundkörper 8 und Tragarmen 4 als Gussteil zu fertigen. An den freien Enden der Tragarme 4 sind Anschlussgelenke 5 ausgebildet, die jeweils aus einer am Tragarm 4 angeordneten Anschlusslasche 7 und einer am Klemmbeschlag 6 angeordneten Anschlussgabel 41 bestehen. Die Anschlusslaschen 7 an den freien Enden der Tragarme 4 erstrecken sich bei allen Ausführungsformen, d.h. einarmige, zweiarmige, dreiarmige und vierarmige Ausführungen einer Verbindungsbrücke 1, stets in axialer Richtung der Tragarme 4, so dass bei einer Befestigung bezogen auf eine Ecke eines Glaswandsegmentes 3 die Anschlusslaschen stets unter 45° verlaufen. Hierdurch wird eine bessere Kraftverteilung und Krafteinleitung über den Klemmbeschlag 6 in die Verbindungsbrücke 1 realisiert, wobei das Anschlussgelenk 5 mittels einer Schraube 46 beweglich gehalten wird. Statt der Schraube 46 kann auch ein Niet, Hohlniet, Bolzen oder ein anderes äquivalentes Bauteil verwendet werden, welches nur einen Kraftschluss realisiert. Die Anschlussgabel 41 ist Bestandteil des jeweiligen ein Glaswandsegment 3, 57 einspannenden Klemmbeschlages 6. In dem zentralen Stützlager 2 ist im Ausführungsbeispiel ein Befestigungsglied 11 gelagert, das eine zentrale Bohrung 54 zur Aufnahme eines Kabels 53 aufweist.

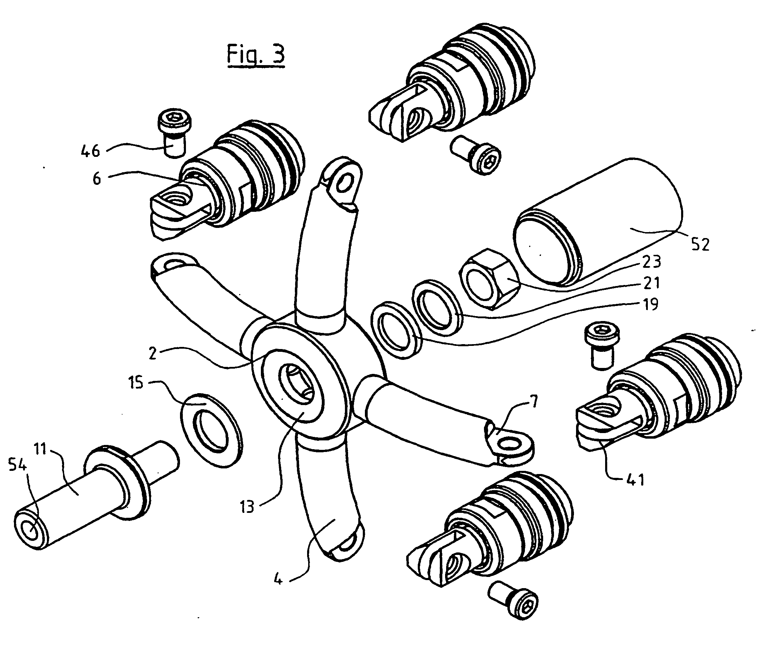

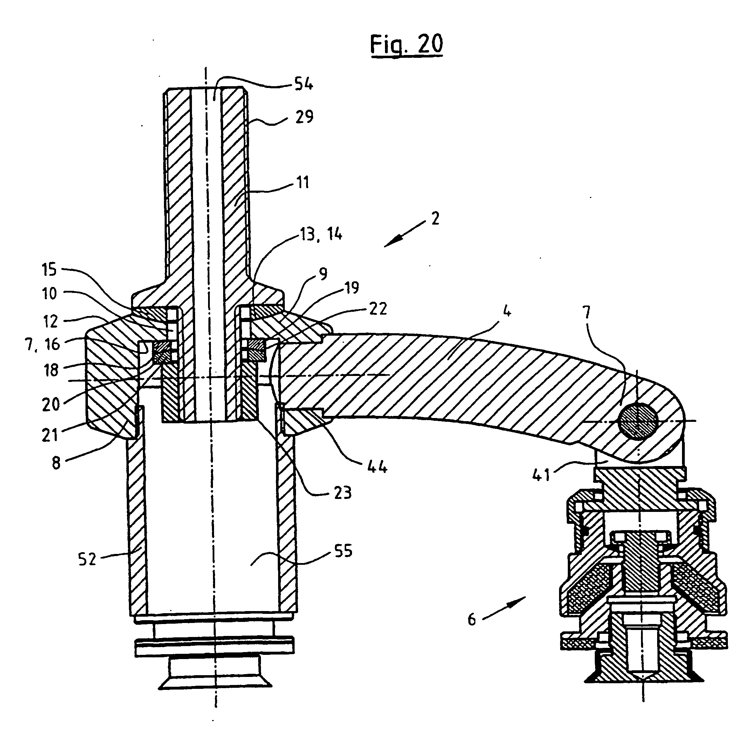

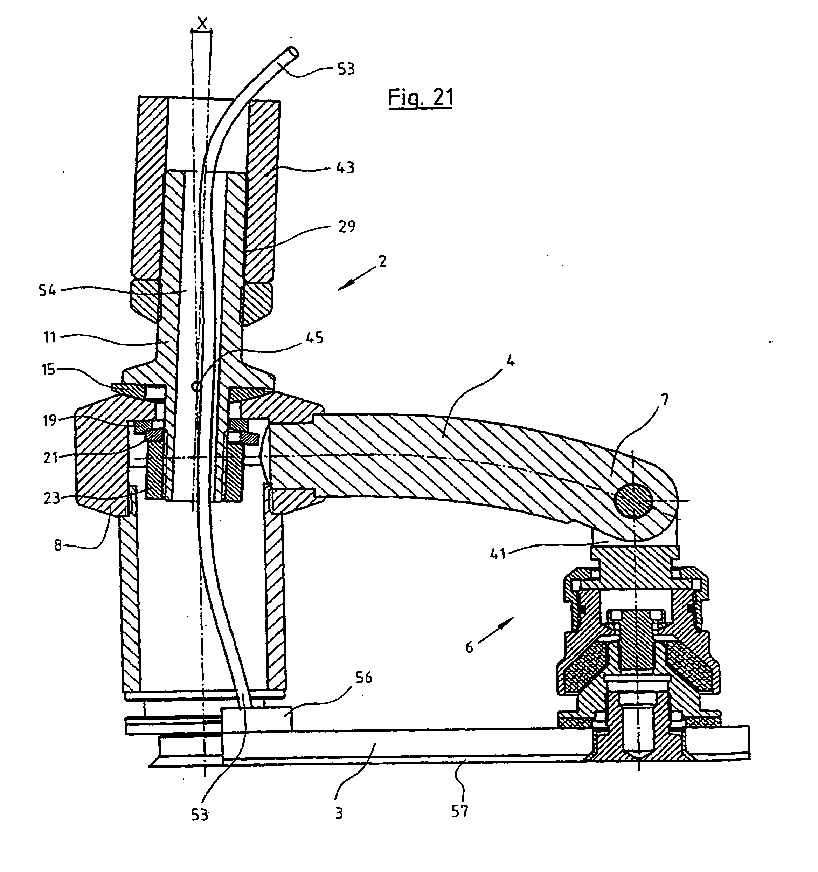

Bezugnehmend auf die Figur 3 in Verbindung mit Figur 20 besitzt das zentrale Stützlager 2 den topfartigen Grundkörper 8, dessen gegen eine Unterkonstruktion 43 (siehe Figur 21) gerichteter Topfboden 9 eine Durchtrittsöffnung 10 für das die Durchtrittsöffnung 10 mit Spiel durchfassende Befestigungsglied 11 aufweist. An einer der Unterkonstruktion 43 zugewandten Fläche 12 des Topfbodens 9 ist eine konkav gemuldete Lagerfläche 13 für die Aufnahme einer Linse 15 angeordnet, die eine konvexe Komplementärfläche 14 aufweist. An einer dem Glassegment 3, 57 zugewandten Fläche 16 des Topfbodens 12 ist ferner eine plane Lagerfläche 17 für die Abstützung einer plankonkaven Linse 19 angeordnet, welche eine plane Lagerfläche 18 aufweist. An einer konkaven Fläche 20 liegt eine plankonvexe Linse 21 mit ihrer konvexen Fläche 22 an. Mittels einer mit dem Befestigungsglied 11 verschraubbaren Kontermutter 23 kann das so gebildete Raumgelenk verstellt und verstarrt werden, ohne dass die Kabelführung des Kabels 53 in der zentralen Bohrung 54 beeinträchtigt wird.

Figur 21 zeigt eine Situation bei der das Befestigungsglied 11 um einen Schwenkpunkt 45 um einen Betrag X zwecks Anpassung an die Unterkonstruktion 43 geschwenkt ist. Der gegen das Glassegment gerichtete Bereich des topfartigen Grundkörpers 8 weist eine Bohrung mit einem Innengewinde auf, in das eine Kabelaufnahme 52 mit ihrem Außengewinde 25 eingeschraubt wird. Die Kabelaufnahme 52 ist als beidseitiges Rohr (Bohrung 55) ausgeführt. Das nicht eingeschraubte freie Ende der Kabelaufnahme 52 kann z.B. eine innenliegende Fase 24 oder einen nach außen verlaufenden trichterförmigen Endbereich 28 aufweisen. Durch diese Ausgestaltung wird eine einwandfreie Führung der durch die Bohrung 55 und die in dem Befestigungsglied 11 enthaltene Bohrung 54 verlaufenden Kabel 53 gewährleistet.

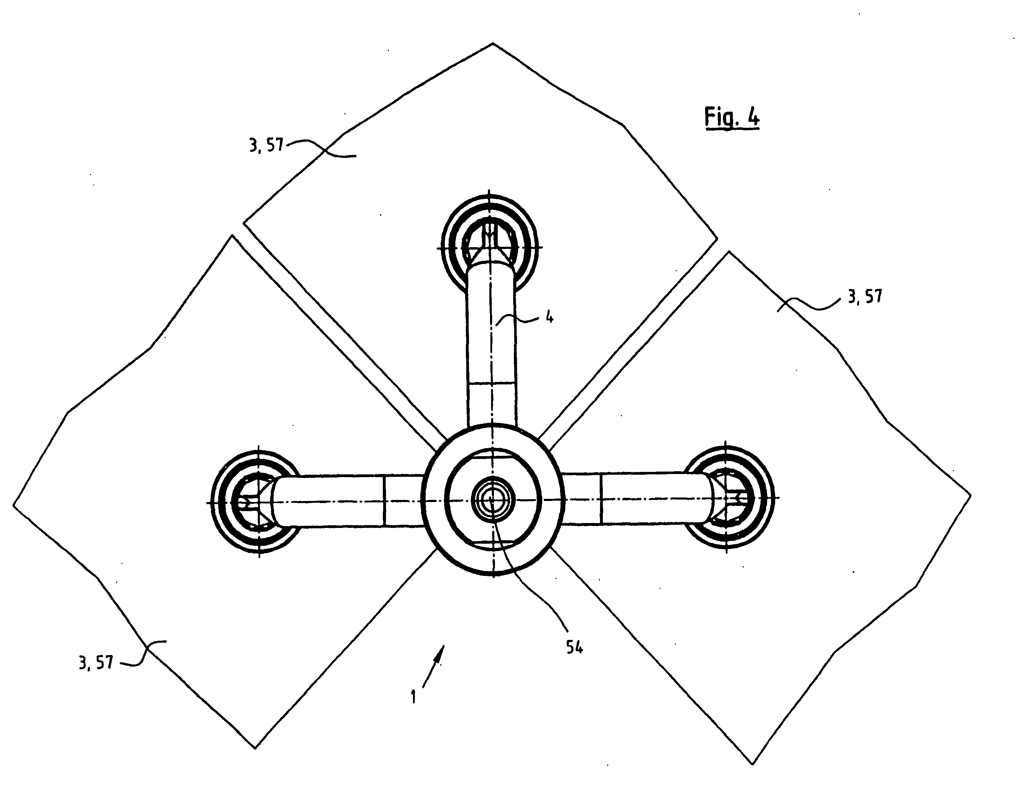

Figur 4 zeigt eine Draufsicht auf eine dreiarmige Ausbildung einer Verbindungsbrücke 1.

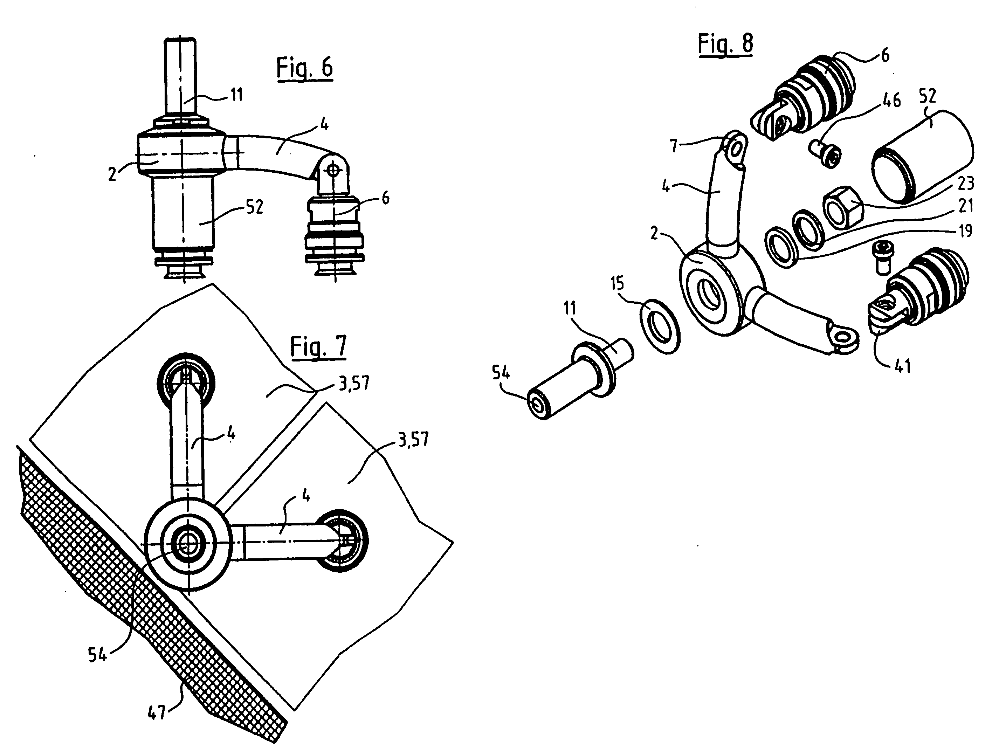

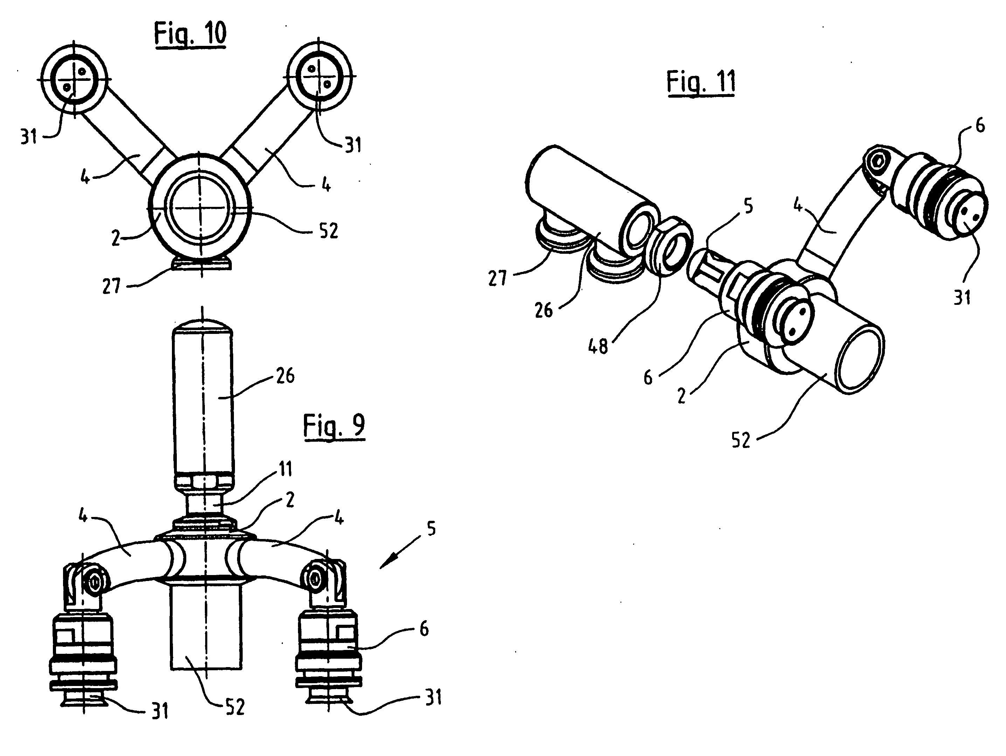

Figur 6 zeigt eine Vorderansicht einer zweiarmigen Ausführungsform einer Verbindungsbrücke 1; Figur 7 die zugehörige Draufsicht. Figur 8 die perspektivische Darstellung der Ausführungsform nach den Figuren 6 und 7. Im Ausführungsbeispiel nach den Figuren 6 bis 8 kann das Befestigungsglied 11 in einer nicht dargestellten Decke oberhalb einer Wand 47 oder einer Unterkonstruktion befestigt werden.

Das Ausführungsbeispiel nach den Figuren 9 bis 11 entspricht im wesentlichen dem Ausführungsbeispiel nach den Figuren 6 bis 8; im Gegensatz hierzu erfolgt der Anschluss des Befestigungsgliedes 11 jedoch nicht an einer Deckenkonstruktion, sondern an einer nicht dargestellten Wand. Hierzu ist auf das Befestigungsglied 11 eine Befestigungshülse 26 aufgesetzt, welche zwecks flächiger Anlage an der Wand mit Stützplatten 27 versehen ist. Mittels einer Kontermutter 48 kann die Befestigungshülse 26 auf dem Befestigungsglied 11 gesichert werden.

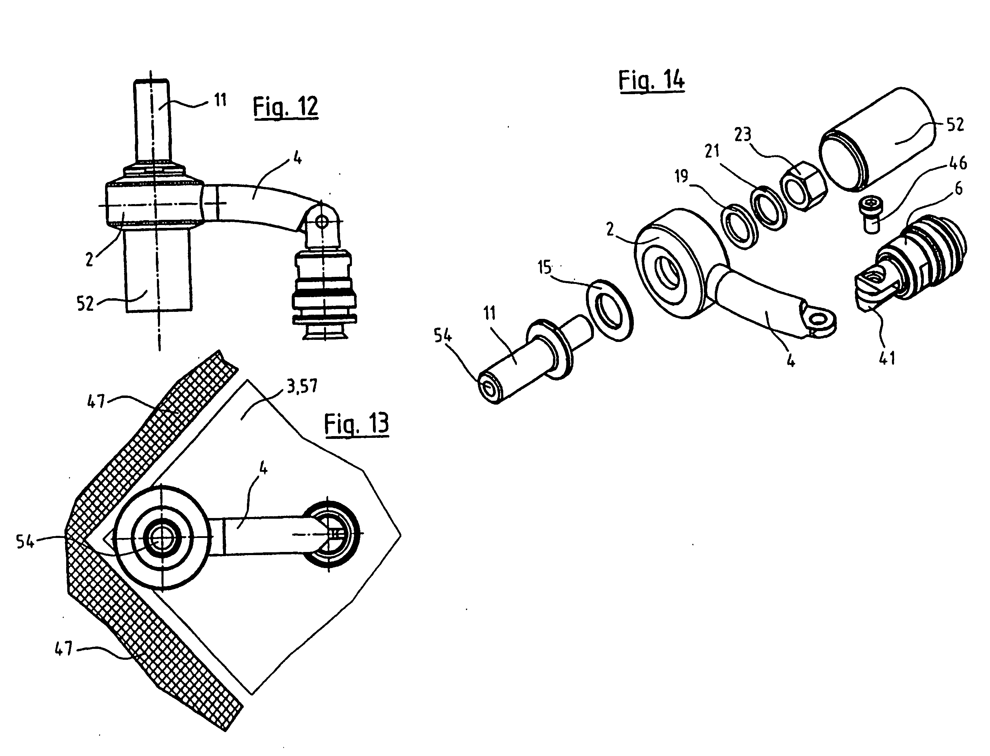

Die Figuren 12 bis 14 zeigen die Ausbildung einer einarmigen Verbindungsbrücke 1, die im Eckbereich einer Wand 47 an einer nicht dargestellten Deckenkonstruktion mittels dem Befestigungsglied 11 angeschlossen ist.

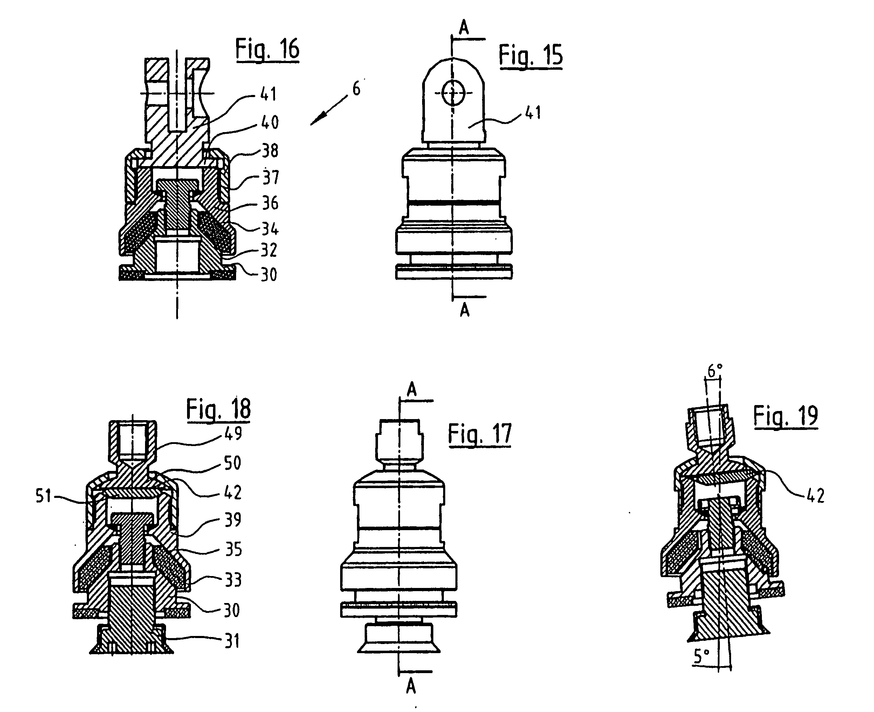

Figur 15 zeigt die Ansicht eines Klemmbeschlages 6; Figur 16 den Schnitt nach der Linie A-A gemäß Figur 15. Die Figur 16 (siehe auch Figur 18) lässt erkennen, dass der Klemmbeschlag 6 ein innenseitiges Klemmelement 30 und ein außenseitiges Klemmelement 31 aufweist, wobei das innenseitige Klemmelement 30 an seiner dem Glaswandsegment 3, 57 abgewandten Mantelfläche 32 eine durch ein dauerelastisches Federglied 33 gebildete kegelige oder ballige Fläche (Mantelfläche 34) aufweist. Das dauerelastische Federglied 33 kann durch ein Gummikissen oder dergleichen gebildet sein. Gegen die kegelige oder ballige Mantelfläche 34 ist mit einstellbarer Vorspannung eine Komplementärfläche 35 eines Innenmantels einer Überwurfglocke 36 anstellbar. Die Überwurfglocke 36 weist an ihrer der Unterkonstruktion 43 zugewandten Seite einen mit einem Gewinde 37 versehenen zylindrischen Fortsatz 39 auf, welcher von einer Überwurfmutter 38 überfasst wird. Zwischen der Überwurtglocke 36 und der Überwurfmutter 38 ist ein mit radialem Spiel geführter Flansch 40 einer Anschlussgabel 41 einspannbar. Die Anschlussgabel 41 ist Bestandteil des Anschlussgelenkes 5.

Figur 17 zeigt ebenfalls die Ansicht eines Klemmbeschlages 6; Figur 18 den zugehörigen Schnitt nach der Linie A-A gemäß Figur 17. Figur 18 unterscheidet sich von Figur 16 lediglich dadurch, dass an Stelle des Flansches 40 nach Figur 16 ein Raumgelenk 42 vorgesehen ist, welches im wesentlichen aus einem linsenförmigen Fortsatz 50 eines hier als Anschlussmutter 49 ausgebildeten Anschlussgliedes und einer zwischen dem linsenförmigen Fortsatz 50 und der Überwurfglocke 36 einspannbaren Linse 51 besteht.

Figur 19 zeigt die raumgelenkige Ausbildung des Klemmbeschlages 6 bei erforderlicher Anpassung an Bautoleranzen vor der Verstarrung des Raumgelenkes 42. Eine Winkelabweichung des Raumgelenkes ist hier mit Y bezeichnet; die Verschwenkungsmöglichkeit aufgrund des dauerelastischen Federgliedes 33 beträgt im dargestellten Ausführungsbeispiel 5°.

In der Figur 21 wird der Anschluss eines Kabels 53, das durch die Kabelaufnahme 52 und anschließend durch die Bohrung 54 des Anschlussgliedes 11 von dem Glaswandsegment 3 ausgeht, dargestellt. Das Kabel 53 geht dabei von einem Anschlussstück 56 aus weg. Das Anschlussstück 56 bildet dabei die Schnittstelle zwischen dem Kabel 53 und einer in oder an einem Glaswandsegment befindlichen solaraktiven Schicht 57. Die solaraktive Schicht 57 wird durch einzelne untereinander zu einem Solarpaneel verschaltete Solarzelle gebildet.

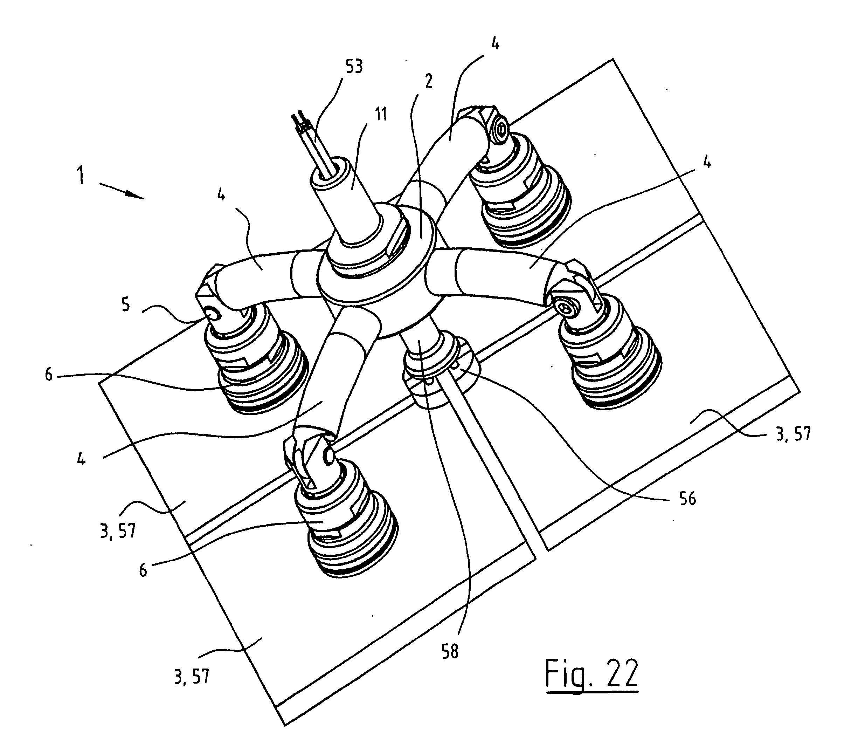

In einem weiteren Ausführungsbeispiel wird in der Figur 22 eine Verbindungsbrücke 1 wiedergegeben, die in perspektivischer Darstellung an vier Glaswandsegmente 3, 57 über die Klemmbeschläge 6 in Verbindung mit den Anschlussgelenken und sich daran anschließenden Tragarmen 4, wobei die Tragarme in dem zentralen Stützlager enden, angeschlossen ist. In diesem Ausführungsbeispiel weist die Verbindungsbrücke 1 eine modifizierte Kabelaufnahme 58 auf. Die aus der Kabelaufnahme 58 heraustretenden Kabel 53 sind über Anschlussstücke 56 mit den Glaswandsegmenten und den darin befindlichen voltaischen Einrichtungen verbunden.

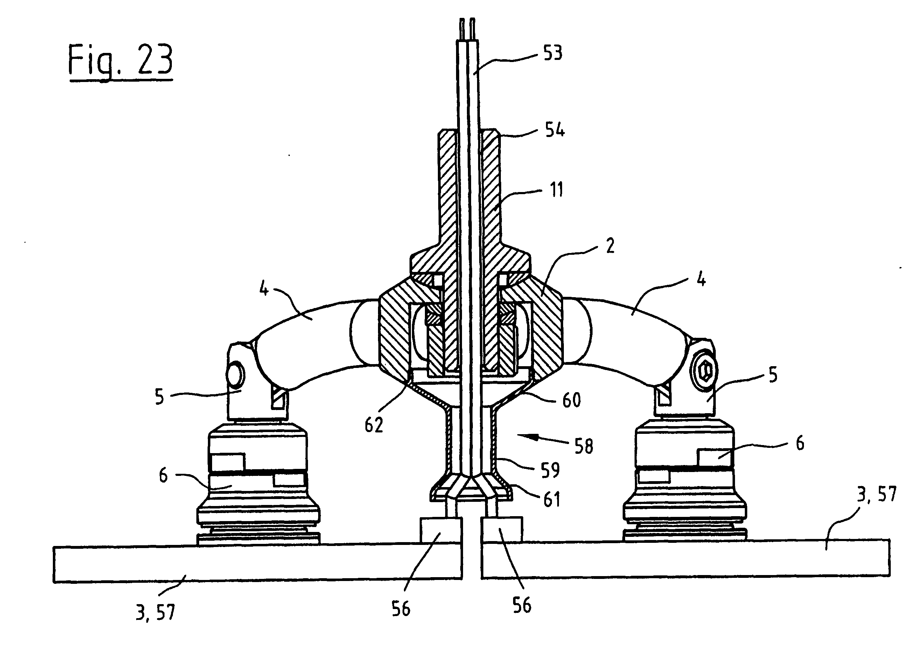

Zum besseren Verständnis wird auf die Figur 23 verwiesen, die einen Ausschnitt und damit eine Schnittdarstellung der Figur 22 hier insbesondere des Befestigungsgliedes 11 und des zentralen Stützlagers mit der daran angeschlossenen Kabelaufnahme 58 wiedergibt. Die Befestigung des Befestigungsgliedes 11 mit dem Stützlager 2 ist in gleicher Weise wie bereits vorbeschrieben ausgeführt worden. Als Modifizierung zeigt sich eine Kabelaufnahme 58, die eine mittlere Einschnürung 59 aufweist. Zu ihrem freien Ende hat die Kabelaufnahme 58 einen trichterförmigen Endverlauf 61, um ein sicheres Einführen der Kabel 53, die an den Verbindungsstücken 56 angeschlossen sind, zu gewährleisten. Durch die mittlere Einschnürung 59 kann bei einer entsprechenden maßlichen Abstimmung mit den verwendeten Kabeln 53 gleichzeitig eine Zugentlastung für die Kabel 53 geschaffen werden. Das anderer Ende der Kabelaufnahme 58 weist ebenfalls einen trichterförmigen Verlauf 60 auf, an dessen Ende ein Gewinde 62 vorhanden ist, welches in das zentrale Stützlager eingeschraubt wird. Somit ist eine Vormontage der Kabel mit der Kabelaufnahme möglich und anschließend wird die gesamte Einheit an das zentrale Stützlager 2 geschraubt, wobei zuvor die Kabel 53 durch das Befestigungsglied 11 geführt werden müssen.

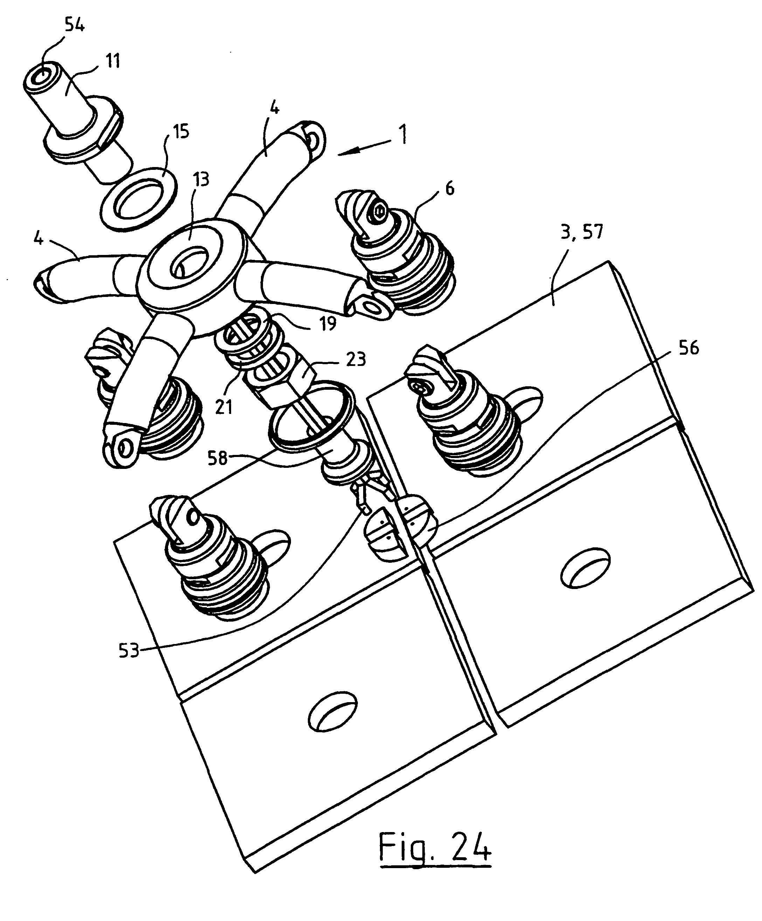

Zur einzelnen Montage wird auf die Figur 24 verwiesen, in der die Verbindungsbrücke 1 mit ihren Einzelteilen wie Befestigungsglied 11, zentrales Stützlager 2 mit angeschlossenen Tragarmen 4, Klemmbeschlägen 6 sowie der Kabeiaufnahme 58 und der Kontermutter 23 dargestellt ist.

### Bezugszeichen

- 1: Verbindungsbrücke
- 2: zentrales Stützlager
- 3: Glaswandsegment
- 4: Tragarm
- 5: Anschlussgelenk
- 6: Klemmbeschlag
- 7: Anschlusslasche
- 8: topfartiger Grundkörper
- 9: Topfboden
- 10: Durchtrittsöffnung
- 11: Befestigungsglied
- 12: Außenfläche des Topfbodens
- 13: Lagerfläche
- 14: Komplementärfläche
- 15: Linse
- 16: Innenfläche des Topfbodens
- 17: Lagerfläche
- 18: Lagerfläche
- 19: Linse
- 20: konkave Fläche
- 21: Linse
- 22: konvexe Fläche
- 23: Kontermutter
- 24: Fase
- 25: Gewinde
- 26: Befestigungshülse
- 27: Stützplatten
- 28: trichterförmiger Endbereich
- 29: Gewinde
- 30: Klemmelement
- 31: Klemmelement
- 32: Mantelfläche
- 33: dauerelastisches Federglied
- 34: Mantelfläche
- 35: Komplementärfläche
- 36: Überwurfglocke
- 37: Gewinde
- 38: Überwurfmutter
- 39: zylindrischer Fortsatz
- 40: Flansch
- 41: Anschlussgabel
- 42: Raumgelenk
- 43: Unterkonstruktion
- 44: radiale Bohrung
- 45: Schwenkpunkt
- 46: Schraube
- 47: Wand
- 48: Kontermutter
- 49: Anschlussmutter
- 50: linsenförmiger Fortsatz
- 51: Linse
- 52: Kabelaufnahme
- 53: Kabel
- 54: Bohrung
- 55: Bohrung
- 56: Anschlussstück
- 57: solaraktive Schicht
- 58: Kabelaufnahme
- 59: mittlere Einschnürung
- 60: trichterförmiger Verlauf
- 61: trichterförmiger Endverlauf
- 62: Gewinde
- X: Winkelabweichung
- Y: Winkelabweichung

## Patentansprüche

1. Verbindungsbrücke (1) zur Verbindung von einem oder mehreren Glaswandsegmenten (3, 57) oder Plattensegmenten mit Solarzellen, die mittels eines zentralen Stützlagers (2) an einer Wand (47), einer Unterkonstruktion oder dergleichen anschließbar ist, mit wenigstens einem radial zum Stützlager (2) verlaufenden Tragarm (4), an dessen dem Stützlager (2) abgewandten freien Ende ein Anschlussgelenk (5) für den Anschluss eines das Glaswandsegment (3, 57) oder Plattensegment einspannenden Klemmbeschlages (6) angeordnet ist, **dadurch gekennzeichnet, dass** das zentrale Stützlager (2) ein Raumgelenklager ist und das Anschlussgelenk (5) als Bolzengelenk ausgebildet ist, wobei in axialer Richtung verlaufend an dem freien Ende des Tragarmes (4) eine Anschlusslasche (7) vorhanden ist, die mit einer Anschlussgabel (41) des Klemmbeschlages (6) zusammenwirkt und zwischen dem Tragarm (4) und dem Klemmbeschlag (6) angeordnet ist, und von dem zentralen Stützlager (2) zu den Glaswandsegmenten (3, 57) oder Plattensegmenten mit den Solarzellen weisend eine Kabelaufnahme (52, 58) vorhanden ist.

2. Verbindungsbrücke nach Anspruch 1, **dadurch gekennzeichnet, dass** der Tragarm (4) der Verbindungsbrücke (1) vollwandig oder teilweise hohl und im Querschnitt kreisförmig oder in einer anderen geometrischen Form ausgebildet ist.

3. Verbindungsbrücke nach Anspruch 1 und 2, **dadurch gekennzeichnet, dass** der Tragarm (4) der Verbindungsbrücke (1) von dem zentralen Stützlager (2) ausgehend gegen das Glaswandsegment (3) oder Plattensegment verlaufend gerade oder konvex gekrümmt ist.

4. Verbindungsbrücke nach einem der Ansprüche 1 bis 3, **dadurch gekennzeichnet, dass** der Tragarm (4) der Verbindungsbrücke (1) in einer radialen Bohrung (44) des zentralen Stützlagers (2) verlötet oder verschweißt ist.

5. Verbindungsbrücke nach einem der Ansprüche 1 bis 4, **dadurch gekennzeichnet, dass** das zentrale Stützlager (2) und die Tragarme (4) einstückig gegossen sind.

6. Verbindungsbrücke nach Anspruch 1, **dadurch gekennzeichnet, dass** das Anschlussgelenk (5) auf Kraftschluss beansprucht wird.

7. Verbindungsbrücke nach einem der Ansprüche 1 bis 5, **dadurch gekennzeichnet, dass** das Raumgelenklager des zentralen Stützlagers (2) aus einem topfartigen Grundkörper (8) besteht, dessen gegen die Unterkonstruktion (43) oder dergleichen gerichteter Topfboden (9) eine Durchtrittsöffnung (10) für ein die Durchtrittsöffnung (10) mit Spiel durchfassendes Befestigungsglied (11) aufweist, wobei an der der Unterkonstruktion (43) oder dergleichen zugewandten Fläche (12) des Topfbodens (9) eine konkav gemuldete Lagerfläche (13) für die Aufnahme einer eine konvexe Komplementärfläche (14) aufweisenden Linse (15) angeordnet ist, dass an der dem Glassegment (3, 57) oder Plattensegment zugewandten Fläche (16) des Topfbodens (12) eine plane Lagerfläche (17) für die Abstützung einer eine plane Lagerfläche (18) aufweisenden plankonkaven Linse (19) angeordnet ist, an deren konkaven Fläche (20) eine plankonvexe Linse (21) mit ihrer konvexen Fläche (22) anliegt und dass das Raumgelenk mittels einer mit dem Befestigungsglied (11) verschraubbaren Kontermutter (23) justierbar ist.

8. Verbindungsbrücke nach den Ansprüchen 1 und 7, **dadurch gekennzeichnet, dass** die dem Glassegment (3) oder Plattensegment zugewandte Seite des topfartigen Grundkörpers (8) ein Gewinde aufweist, in welches ein Gewinde (25, 62) der Kabelaufnahme (52, 58) eingeschraubt ist.

9. Verbindungsbrücke nach einem der Ansprüche 1 bis 8, **dadurch gekennzeichnet, dass** das im Stützlager (2) raumgelenkig gelagerte Befestigungsglied (11) mittels aufweisender Befestigungshülse (26) mit der Wand (47) verbindbar ist.

10. Verbindungsbrücke nach Anspruch 9, **dadurch gekennzeichnet, dass** die Befestigungshülse (26) an der Wand (47) anlegbare Stützplatten (27) aufweist.

11. Verbindungsbrücke nach Anspruch 7, **dadurch gekennzeichnet, dass** das Befestigungsglied (11) eine durchgehende axiale Bohrung (54) aufweist.

12. Verbindungsbrücke nach einem der Ansprüche 1 bis 11, **dadurch gekennzeichnet, dass** der Klemmbeschlag (6) ein innenseitiges Klemmelement (30) und ein außenseitiges Klemmelement (31) aufweist, wobei das innenseitige Klemmelement (30) an seiner dem Glaswandsegment (3, 57) abgewandten Mantelfläche (32) eine durch ein dauerelastisches Federglied (33) gebildete kegelige oder ballige Fläche (34) aufweist, gegen die eine Komplementärfläche (35) eines Innenmantels einer Überwurfglocke (36) mit einstellbarer Vorspannung anstellbar ist, wobei die Überwurfglocke (36) an ihrer der Unterkonstruktion (43) zugewandten Seite einen mit einem Gewinde (37) versehenen, von einer Überwurfmutter (38) überfassten zylindrischen Fortsatz (39) aufweist und zwischen der Überwurfglocke (36) und der Überwurfmutter (38) ein mit radialem Spiel geführter Flansch (40) der Anschlussgabel (41) des Anschlussgelenkes (5) einspannbar ist.

13. Verbindungsbrücke nach einem der Ansprüche 1 bis 11, **dadurch gekennzeichnet, dass** der Klemmbeschlag (6) ein innenseitiges Klemmelement (30) und ein außenseitiges Klemmelement (31) aufweist, wobei das innenseitige Klemmelement (30) an seiner dem Glaswandsegment (3) abgewandten Mantelfläche (32) eine durch eine dauerelastisches Federglied (33) gebildete kegelige oder ballige Fläche (34) aufweist, gegen die eine Komplementärfläche (35) eines Innenmantels einer Überwurfglocke (36) mit einstellbarer Vorspannung anstellbar ist, wobei die Überwurfglocke (36) an ihrer der Unterkonstruktion (43) zugewandten Seite einen mit einem Gewinde (37) versehenen, von einer Überwurfmutter (38) überfassten zylindrischen Fortsatz (39) aufweist und zwischen der Überwurfglocke (36) und der Überwurfmutter (38) ein Raumgelenk (42) der Anschlussgabel (41) angeordnet ist.

14. Verbindungsbrücke nach einem der Ansprüche 1 bis 13, **dadurch gekennzeichnet, dass** die Verbindungsbrücke (1) vier radial zum Stützlager (2) verlaufende Tragarme (4) aufweist, die jeweils einen Winkel von 90° zwischen sich einschließen.

15. Verbindungsbrücke nach einem der Ansprüche 1 bis 13, **dadurch gekennzeichnet, dass** die Verbindungsbrücke (1) drei radial zum Stützlager (2) verlaufende Tragarme (4) aufweist, die jeweils einen Winkel von 90° zwischen sich einschließen.

16. Verbindungsbrücke nach einem der Ansprüche 1 bis 13, **dadurch gekennzeichnet, dass** die Verbindungsbrücke (1) zwei radial zum Stützlager (2) verlaufende Tragarme (4) aufweist, die einen Winkel von 90° zwischen sich einschließen.

17. Verbindungsbrücke nach einem der Ansprüche 1 bis 13, **dadurch gekennzeichnet, dass** die Verbindungsbrücke (1) einen radial zum Stützlager (2) verlaufenden Tragarm (4) aufweist.

18. Verbindungsbrücke nach den vorhergehenden Ansprüchen, **dadurch gekennzeichnet, dass** die Verbindungsbrücke (1) aus Edelstahl, einer Titanlegierung oder Aluminiumlegierung besteht.

19. Verbindungsbrücke nach den Ansprüchen 1 und 8, **dadurch gekennzeichnet, dass** die Kabelaufnahme (52, 58) an ihrem freien Ende eine innenliegende Fase (24) aufweist.

20. Verbindungsbrücke nach den Ansprüchen 1 und 8, **dadurch gekennzeichnet, dass** die Kabelaufnahme (52, 58) einen trichterförmigen Endbereich (28, 61) aufweist.

21. Verbindungsbrücke nach einem der Ansprüche 19 oder 20, **dadurch gekennzeichnet, dass** die Kabelaufnahme (52) aus einem gerade verlaufenden Rohr besteht.

22. Verbindungsbrücke nach einem der Ansprüche 19 oder 20, **dadurch gekennzeichnet, dass** die Kabelaufnahme (58) in ihrem mittleren Bereich eine Einschnürung (59) aufweist, die zum freien Ende einen trichterförmigen Verlauf (61) beinhaltet und die mittlere Einschnürung (59) andererends einen trichterförmigen Verlauf (60) beinhaltet, an dessen Ende ein Gewinde (62) vorhanden ist.

## Claims

1. A connector bridge (1) for the connection of one or more glass panel segments (3, 57) or of panel segments with solar cells, which is connectable to a wall (47), to a sub-construction or the like by means of a central supporting bearing (2), and includes at least one carrying arm (4) radially extending in relation to the supporting bearing (2), a coupling articulation (5) being disposed at the free end of said arm opposite to the supporting bearing (2) for the connection of a clamping fitting (6), clamping the glass panel segment (3, 57) or the panel segment, **characterized in that** the central supporting bearing (2) is a three-dimensional articulated bearing and the coupling articulation (5) is formed as a pin joint, a connecting plate (7) extending in axial direction being provided at the free end of the carrying arm (4), which plate cooperates with a connecting fork (41) of the clamping fitting (6) and is disposed between the carrying arm (4) and the clamping fitting (6), and a cable reception (52, 58) being provided pointing from the central supporting bearing (2) to the glass panel segments (3, 57) or to the panel segments with the solar cells.

2. A connector bridge according to claim 1, **characterized in that** the carrying arm (4) of the connector bridge (1) is solid-webbed or partially hollow and has a circular cross-section or is formed in a different geometric shape.

3. A connector bridge according to claim 1 and 2, **characterized in that** the carrying arm (4) of the connector bridge (1), starting at the central supporting bearing (2) and extending towards the glass panel segment (3) or to the panel segment, is straight or convex curved.

4. A connector bridge according to any of the claims 1 to 3, **characterized in that** the carrying arm (4) of the connector bridge (1) is soldered or brazed in a radial borehole (44) of the central supporting bearing (2).

5. A connector bridge according to any of the claims 1 to 4, **characterized in that** the central supporting bearing (2) and the carrying arms (4) are integrally cast.

6. A connector bridge according to claim 1, **characterized in that** the coupling articulation (5) is subject to positive engagement.

7. A connector bridge according to any of the claims 1 to 5, **characterized in that** the three-dimensional articulated bearing of the central supporting bearing (2) consists of a pot-like body (8), the pot bottom (9) thereof oriented against the sub-construction (43) or the like presenting a through-opening (10) for a fastening member (11) passing through the through-opening (10) with play, at the surface (12) of the pot-bottom (9) oriented towards the sub-construction (43) or the like, a concave trough-shaped bearing surface (13) being disposed for the reception of a lens (15) having a convex complementary surface (14), **in that**, at the surface (16) of the pot bottom (12) oriented towards the glass segment (3, 57) or the panel segment, a plane bearing surface (17) is disposed for the support of a plano-convex lens (19) presenting a plane bearing surface (18), a convex surface (22) of a plano-convex lens (21) abutting at the at the concave surface (20) of said lens, and **in that** the three dimensional articulation is adjustable by means of a counter-nut (23) screwable to the fastening member (11).

8. A connector bridge according to the claims 1 and 7, **characterized in that** the side of the pot-like body (8) oriented towards the glass segment (3) or the panel segment presents a screw thread, into which a thread (25, 62) of the cable reception (52, 58) is screwed.

9. A connector bridge according to any of the claims 1 to 8, **characterized in that** the fastening member (11) supported in the supporting bearing (2) in a three-dimensional and articulated manner is connectable to the wall (47) by means of a provided fastening tube (26).

10. A connector bridge according to claim 9, **characterized in that** the fastening tube (26) presents supporting plates (27) locatable at the wall (47).

11. A connector bridge according to claim 7, **characterized in that** the fastening member (11) presents a continuous axial borehole (54).

12. A connector bridge according to any of the claims 1 to 11, **characterized in that** the clamping fitting (6) presents an inside clamping component (30) and an outside clamping component (31), the inside clamping component (30) presenting, at the circumferential surface (32) thereof oriented opposite to the glass panel segment (3, 57), a conical or crowned surface (34) formed by a permanently elastic spring member (33), a complementary surface (35) of an internal cylindrical surface of a coupling-bell (36) being locatable against said surface (34) with adaptable initial tension, the coupling-bell (36) at the side thereof oriented towards the sub-construction (43) presenting a cylindrical extension (39), which is provided with a thread (37) and overlapped by a union nut (38), and a flange (40) of the connecting fork (41) of the coupling articulation (5), which is guided with radial play, being able to be clamped between the coupling bell (36) and the union nut (38).

13. A connector bridge according to any of the claims 1 to 11, **characterized in that** the clamping fitting (6) presents an inside clamping component (30) and an outside clamping component (31), the inside clamping component (30) presenting, at the circumferential surface (32) thereof oriented opposite to the glass panel segment (3), a conical or crowned surface (34) formed by a permanently elastic spring member (33), a complementary surface (35) of an internal cylindrical surface of a coupling-bell (36) being locatable against said surface (34) with adaptable initial tension, the coupling-bell (36) at the side thereof oriented towards the sub-construction (43) presenting a cylindrical extension (39), which is provided with a thread (37) and overlapped by a union nut (38), and a three-dimensional articulation (42) of the connecting fork (41) being disposed between the coupling bell (36) and the union nut (38).

14. A connector bridge according to any of the claims 1 to 13, **characterized in that** the connector bridge (1) presents four carrying arms (4) radially extending in relation to the supporting bearing (2) and including between them an angle of 90° respectively.

15. A connector bridge according to any of the claims 1 to 13, **characterized in that** the connector bridge (1) presents three carrying arms (4) radially extending in relation to the supporting bearing (2) and including between them an angle of 90° respectively.

16. A connector bridge according to any of the claims 1 to 13, **characterized in that** the connector bridge (1) presents two carrying arms (4) radially extending in relation to the supporting bearing (2) and including between them an angle of 90° respectively.

17. A connector bridge according to any of the claims 1 to 13, **characterized in that** the connector bridge (1) presents one carrying arm (4) radially extending to the supporting bearing (2).

18. A connector bridge according to the preceding claims, **characterized in that** the connector bridge (1) consists of stainless steel, of a titanium alloy or of an aluminum alloy.

19. A connector bridge according to the claims 1 and 8, **characterized in that** the cable reception (52, 58) at the free end thereof presents an inside chamfer (24).

20. A connector bridge according to the claims 1 and 8, **characterized in that** the cable reception (52, 58) presents a funnel-shaped terminal area (28, 61).

21. A connector bridge according to any of the claims 19 or 20, **characterized in that** the cable reception (52) consists of a straight tube.

22. A connector bridge according to any of the claims 19 or 20, **characterized in that** the cable reception (58) in the central area thereof presents a narrowing (59) which includes a funnel-shaped extension (61) towards the free end thereof, and the central narrowing (59) includes a funnel-shaped extension (60) at the other end thereof, a thread (62) being provided at the end thereof.

## Revendications

1. Pont de connexion (1) pour la connexion d'un ou plusieurs segments de paroi en verre (3, 57) ou de segments de panneaux avec des cellules solaires, qui, par l'intermédiaire d'un support central (2), peut être relié à une paroi (47), à une charpente ou similaire, avec au moins un bras porteur (4) s'étendant radialement par rapport au support (2), à l'extrémité libre dudit bras opposée au support (2) étant agencée une articulation de raccordement (5) pour le raccordement d'une ferrure de serrage (6) serrant le segment de paroi en verre (3, 57) ou segment de panneau, **caractérisé en ce que** le support central (2) est une articulation en trois dimensions et **en ce que** l'articulation de raccordement (5) est aménagée en articulation à tourillon, une patte de raccordement (7), s'étendant en direction axiale, étant prévue sur l'extrémité libre du bras porteur (4), patte qui coopère avec une chape de raccordement (41) de la ferrure de serrage (6) et est agencée entre le bras porteur (4) et la ferrure de serrage (6), et une réception à câbles (52, 58) étant prévue orientée depuis le support central (2) vers les segments de paroi en verre (3, 57) ou segments de panneaux avec les cellules solaires.

2. Pont de connexion selon la revendication 1, **caractérisé en ce que** le bras porteur (4) du pont de connexion (1) est du type à âme pleine ou partiellement creux, et la section dudit bras est aménagée de façon circulaire ou présente une autre forme géométrique.

3. Pont de connexion selon la revendication 1 et 2, **caractérisé en ce que** le bras porteur (4) du pont de connexion (1), depuis le support central (2) vers le segment de paroi en verre (3) ou le segment de panneau, s'étend de façon tout droit ou courbée de façon convexe.

4. Pont de connexion selon l'une des revendications 1 à 3, **caractérisé en ce que** le bras porteur (4) du pont de connexion (1) est brasé ou soudé dans un alésage radial (44) du support central (2).

5. Pont de connexion selon l'une des revendications 1 à 4, **caractérisé en ce que** le support central (2) et les bras porteurs (4) sont coulés intégralement.

6. Pont de connexion selon la revendication 1, **caractérisé en ce que** l'articulation de raccordement (5) est soumise à l'adhérence.

7. Pont de connexion selon l'une des revendications 1 à 5, **caractérisé en ce que** l'articulation en trois dimensions du support central (2) est un corps (8) en forme de pot, dont le fond de pot (9) orienté contre la charpente (43) ou similaire présente un orifice de passage (10) pour un membre de fixation (11) passant avec jeu à travers l'orifice de passage (10), une surface de coussinet (13), en forme d'un creux concave pour la réception d'une lentille (15) présentant une surface complémentaire convexe (14), étant agencée sur la surface (12) du fond de pot (9) orientée vers la charpente (43) ou similaire, **en ce que** sur la surface (16) du fond de pot (12), orientée vers le segment en verre (3, 57) ou vers le segment de panneaux, est agencée une surface de coussinet (17) plane pour l'appui d'une lentille plano-concave (19) ayant une surface de coussinet (18) plane, sur la surface (20) concave de laquelle s'appuie une lentille (21) plano-convexe avec sa surface convexe (22), et **en ce que** l'articulation en trois dimensions est ajustable au moyen d'un contre-écrou (23) vissable avec le membre de fixation (11).

8. Pont de connexion selon les revendications 1 et 7, **caractérisé en ce que** la face du corps (8) en forme de pot, orientée vers le segment en verre (3) ou vers le segment de panneaux, présente un taraudage, dans lequel est vissé un filetage (25, 62) de la réception à câbles (52, 58).

9. Pont de connexion selon l'une des revendications 1 à 8, **caractérisé en ce que** le membre de fixation (11), supporté de façon articulée en trois dimensions dans le support (2), peut être connecté à la paroi (47) au moyen d'une douille de fixation (26) prévue.

10. Pont de connexion selon la revendication 9, **caractérisé en ce que** la douille de fixation (26) présente des plaques d'appui (27) qui peuvent s'appuyer sur la paroi (47).

11. Pont de connexion selon la revendication 7, **caractérisé en ce que** le membre de fixation (11) présente un alésage (54) axial continu.

12. Pont de connexion selon l'une des revendications 1 à 11, **caractérisé en ce que** la ferrure de serrage (6) présente un élément de serrage intérieur (30) et un élément de serrage extérieur (31), l'élément de serrage intérieur (30) présentant, sur sa surface d'enveloppe (32) orientée de façon opposée au segment de paroi en verre (3, 57), une surface (34) conique ou sphérique, aménagée par un membre à ressort (33) élastique en permanence, contre laquelle une surface complémentaire (35) d'une enveloppe intérieure d'une cloche d'accouplement (36) est ajustable avec une précontrainte réglable, la cloche d'accouplement (36) présentant, sur sa face orientée vers la charpente (43), un prolongement cylindrique (39) pourvu d'un filetage (37) et recouvert par un écrou d'accouplement (38), et une bride (40), guidée radialement avec jeu, de la chape de raccordement (41) de l'articulation de raccordement (5) pouvant être serrée entre la cloche d'accouplement (36) et l'écrou d'accouplement (38).

13. Pont de connexion selon l'une des revendications 1 à 11, **caractérisé en ce que** la ferrure de serrage (6) présente un élément de serrage intérieur (30) et un élément de serrage extérieur (31), l'élément de serrage intérieur (30) présentant, sur sa surface d'enveloppe (32) orientée de façon opposée au segment de paroi en verre (3), une surface (34) conique ou sphérique, aménagée par un membre à ressort (33) élastique en permanence, contre laquelle une surface complémentaire (35) d'une enveloppe intérieure d'une cloche d'accouplement (36) est ajustable avec une précontrainte réglable, la cloche d'accouplement (36) présentant, sur sa face orientée vers la charpente (43), un prolongement cylindrique pourvu d'un filetage (37) et recouvert par un écrou d'accouplement (38), et une articulation en trois dimensions (42) de la chape de raccordement (41) étant agencée entre la cloche d'accouplement (36) et l'écrou d'accouplement (38).

14. Pont de connexion selon l'une des revendications 1 à 13, **caractérisé en ce que** le pont de connexion (1) présente quatre bras porteurs (4) s'étendant radialement par rapport au support (2) et comprenant entre eux un angle de 90° respectivement.

15. Pont de connexion selon l'une des revendications 1 à 13, **caractérisé en ce que** le pont de connexion (1) présente trois bras porteurs (4) s'étendant radialement par rapport au support (2) et comprenant entre eux un angle de 90° respectivement.

16. Pont de connexion selon l'une des revendications 1 à 13, **caractérisé en ce que** le pont de connexion (1) présente deux bras porteurs (4) s'étendant radialement par rapport au support (2) et comprenant entre eux un angle de 90° respectivement.

17. Pont de connexion selon l'une des revendications 1 à 13, **caractérisé en ce que** le pont de connexion (1) présente un bras porteur (4) s'étendant radialement par rapport au support (2).

18. Pont de connexion selon les revendications précédentes, **caractérisé en ce que** le pont de connexion (1) est réalisé en acier inoxydable, en alliage de titanium ou en alliage d'aluminium.

19. Pont de connexion selon les revendications 1 et 8, **caractérisé en ce que** la réception à câbles (52, 58), sur son extrémité libre, présente un chanfrein (24) intérieur.

20. Pont de connexion selon les revendications 1 et 8, **caractérisé en ce que** la réception à câbles (52, 58) présente une région terminale (28, 61) en forme d'entonnoir.

21. Pont de connexion selon l'une des revendications 19 ou 20, **caractérisé en ce que** la réception à câbles (52) est un tube s'étendant tout droit.

22. Pont de connexion selon l'une des revendications 19 ou 20, **caractérisé en ce que** la réception à câbles (58) présente un étranglement dans sa partie centrale, qui comporte un parcours en forme d'entonnoir (61) en direction de son extrémité libre, et l'étranglement central (59) comporte sur l'autre extrémité un parcours en forme d'entonnoir (60), à l'extrémité duquel est prévu un filetage (62).
